(19) Europäisches Patentamt
European Patent Office
Office européen des brevets

(11) **EP 4 629 495 A1**

(12) **EUROPEAN PATENT APPLICATION**

(43) Date of publication:
 **08.10.2025 Bulletin 2025/41**

(21) Application number: **24168114.7**

(22) Date of filing: **02.04.2024**

(51) International Patent Classification (IPC):
 *H02M 1/12* (2006.01)   *H02M 1/44* (2007.01)
 *H02M 7/483* (2007.01)   *H02M 7/5387* (2007.01)

(52) Cooperative Patent Classification (CPC):
 **H02M 1/123; H02M 1/44; H02M 7/483;**
 **H02M 7/53876; H02M 7/4833**

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **GE KH MA MD TN**

(71) Applicant: **Collins Aerospace Ireland, Limited**
 **Cork (IE)**

(72) Inventors:
 • **PEDROSO, Douglas Araujo**
  **Cork, T12 WDN0 (IE)**
 • **ÁLVAREZ, Ignacio Castro**
  **33202 Gijón (ES)**

(74) Representative: **Dehns**
 **10 Old Bailey**
 **London EC4M 7NG (GB)**

(54) **SPACE VECTOR MODULATION FOR EMI MITIGATION IN POWER CONVERTERS**

(57)    A method of implementing a space vector pulse width modulation scheme comprising: mapping switching states for an n-phase, where n is an integer, multilevel inverter onto a two-dimensional hexagonal space vector diagram; identifying redundant vectors in the space vector diagram and removing redundant vectors associated with a common mode voltage current contribution of more than a predetermined threshold; identifying a location in the space vector diagram of a voltage reference vector; identifying a sector of the space vector diagram defined by four vectors within which the voltage reference vector is located; determining duty cycles and switching states associated with the four vectors to synthesise the voltage reference vector.

FIG. 8

EP 4 629 495 A1

## EP 4 629 495 A1

**Description**

TECHNICAL FIELD

The present disclosure is concerned with a modified space vector modulation for reducing common mode voltage in a power converter to reduce the need for EMI filtering.

BACKGROUND

Power converters or power drives are used in many applications to convert a source voltage to one or more different levels of load voltage. Typically, power converters use a switching inverter that is switched, according to a modulation signal onto which the control signal is modulated to provide the desired output voltages. The presence of power converters and, particularly, high frequency PWM signals within switching voltage source inverters (VSI), leads to the generation of electromagnetic interference (EMI) noise. This can present serious problems in many applications. One application where power conversion is being used increasingly, and where EMI can have serious consequences, is in propulsion systems for aircraft.

Steps have to be taken, therefore, to reduce or mitigate this EMI, which becomes more difficult as bus voltages and switch speeds increase. Passive EMI filters (PEF) have been the main solution to EMI noise. In aerospace applications, though, industry standard DO-160 imposes tight current limits for both differential mode (DM) and common mode (CM) conducted noise. The tight limits result in bulky PEFs, and, therefore, high power density solutions are needed. Active EMI filters (AEF) provide improved size and performance but further developments are needed for high power applications.

Software solutions to EMI mitigation can result in the need for smaller EMI filters. More specifically to aerospace applications such as propulsion, modulation techniques can be used for voltage source inverters (VSIs) that reduce the EMI generated and so lead to lower attenuation requirements and, therefore size, of the EMI filters.

A commonly used modulation technique to control the switching of the inverter is pulse width modulation, PWM, where high frequency pulses are generated containing the lower frequency ac signal modulated into the width of the pulse such that the switching duration, determined by the pulse width, varies according to the modulating signal modulated onto the carrier signal to produce switch control signals. The output of the inverter therefore corresponds to the modulating signal. In a three-phase system, for example, the inverter typically includes six switching devices (e.g. MOSFETS) that line the DC lines of the input side (typically from an AC input rectified by a rectifier to provide positive and negative DC lines). By switching the inverter switches on and off, the three phases of the load are linked to the positive and negative DC lines. By switching the switches in a controlled fashion (via the PWM modulated control signal), the voltages and currents on the lines linked to the load can be controlled so that variable frequency power is delivered to the load.

Different PWM schemes are known in the art including space vector PWM. Space vector modulation (SVM) is used to generate PWM signals to control switches of an inverter which provides the required modulated voltage to drive the motor at the desired speed and torque. By controlling switching between the switches, different output voltages can be generated. When multiple output phases are produced, each switch closure combination produces a pattern of output voltages across the phases which are known as 'space vectors'. The switching scheme is, therefore, known as 'space vector modulation'. The desired ac signal waveform is represented as a reference vector, and is based on a space vector diagram that maps all possible discrete output voltages that the inverter can generate from its input as state vectors. The reference vector is then derived from a linear combination of multiple state vectors, therefore generating an averaged output voltage equal to the ac reference over one switching period.

In a simple, two-level, three-phase inverter, having six switches, two on each phase leg of the output, for each leg of the inverter output, either the top switch will be ON and the bottom switch OFF or vice versa, giving eight ($2^3$) possible switch state combinations. Each switching configuration results in a specific voltage applied to the motor terminals. These voltages are represented as space vectors, referred to as 'base vectors' on a hexagonal star space vector diagram, each vector making up a spoke of the star, separated by 60 degrees. The vector for all switches being ON or all switches being OFF are the 'null' vectors at the centre of the star. The aim of SVM is to produce a vector, by combining the closest base vectors, during the PWM period that synthesises the desired output voltage vector (reference vector). For two-level inverters, this is done by locating the reference voltage on the state vector diagram to identify the two adjacent base vectors and then using known equations to determine the switching scheme applying one base vector for a predetermined portion of the PWM duration, the other base vector for another predetermined time and the null vector for the rest of the time. The reference voltage vector can be represented as $V_{REF} = V_1 T_1 + V_2 T_2 + V_3 T_3$. By controlling the switching sequence, and the ON time duration of pulses, any voltage vector is achievable for every PWM period. The objective of SVM is to generate sequences that correspond to the reference voltage vector for every PWM period to achieve a continuously rotating space vector.

For multi-level inverter topologies, SVM is more complex due to a higher number of available switching combinations. The computation of the modulation is simplified by, again, representing the switching vectors on a space vector diagram. The SVD again has a hexagonal shape but with an additional outer 'ring' for each additional level. Again, the task of the SVM is to determine the positions that the switches should assume, and for how long (duty cycle) to synthesise the reference voltage based on combining several switching (base) vectors close to the reference vector in the SVD. In contrast to two-level systems, multiple level systems have more degrees of freedom/redundancies due to the fact that different switching vectors can reproduce the same switching state (line vector - each 'dot' on the SV diagram as discussed below). This additional freedom means that the space vector diagram can also be used to optimise other parameters of inverter operation by appropriate selection of one of the available options. One common use of modulation for such topologies is for EMI mitigation or CM noise reduction.

As is known in the field of power drives/power converters, as the inverter switches are switched on or off, common-mode voltages (CMV) may be generated that appear in the output phase of the drive and these can result in common-mode current (CMC) spikes. CMV and CMC can adversely affect system performance and can even damage system parts. It would be desirable to reduce CMV by modifying the modulation.

There is a desire for an improved SVM scheme that allows CMV to be reduced while maintaining regulation or balancing of the dc-link capacitors.

SUMMARY

According to this disclosure, there is provided a method of implementing a space vector pulse width modulation scheme comprising: mapping switching states for an n-phase, where n is an integer, multi-level inverter onto a two-dimensional hexagonal space vector diagram; identifying redundant vectors in the space vector diagram and removing redundant vectors associated with a common mode voltage current contribution of more than a predetermined threshold; identifying a location in the space vector diagram of a voltage reference vector; identifying a sector of the space vector diagram defined by four vectors within which the voltage reference vector is located; determining duty cycles and switching states associated with the four vectors to synthesise the voltage reference vector.

There is also provided a space vector modulator for performing such method and a power convertor including such a space vector modulator.

BRIEF DESCRIPTION

Figure 1 shows a schematic view of an electric propulsion drive train.

Figure 2 a traditional three-level space vector diagram with vectors CMV and NP current contribution.

Figure 3 shows a modified three-level space vector diagram.

Figures 4(a) to 4(c) show space vector diagrams according to examples of the disclosure.

Figures 5(a) to 5(f) are shown to further explain examples according to this disclosure.

Figures 6(a) to 6(f) are shown to further explain examples according to this disclosure.

Figures 7(a) to 7(f) are shown to further explain examples according to this disclosure.

Figure 8 is a flowchart of a switching period of a modulation algorithm according to this disclosure.

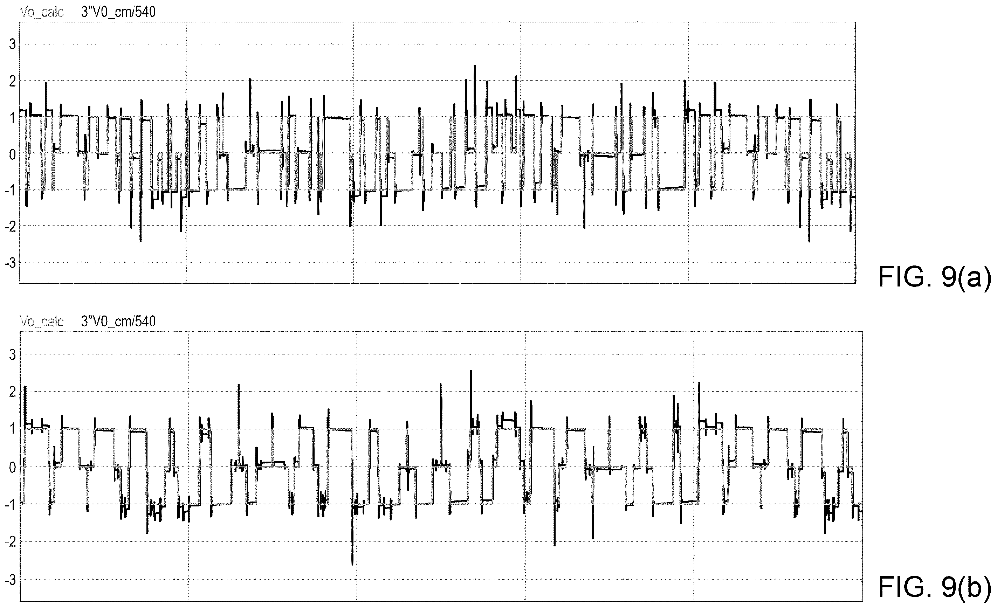

Figure 9(a) shows the CMV generated using one example of a modulation algorithm according to the disclosure.

Figure 9(b) shows the CMV generated using another example of a modulation algorithm according to the disclosure.

DETAILED DESCRIPTION

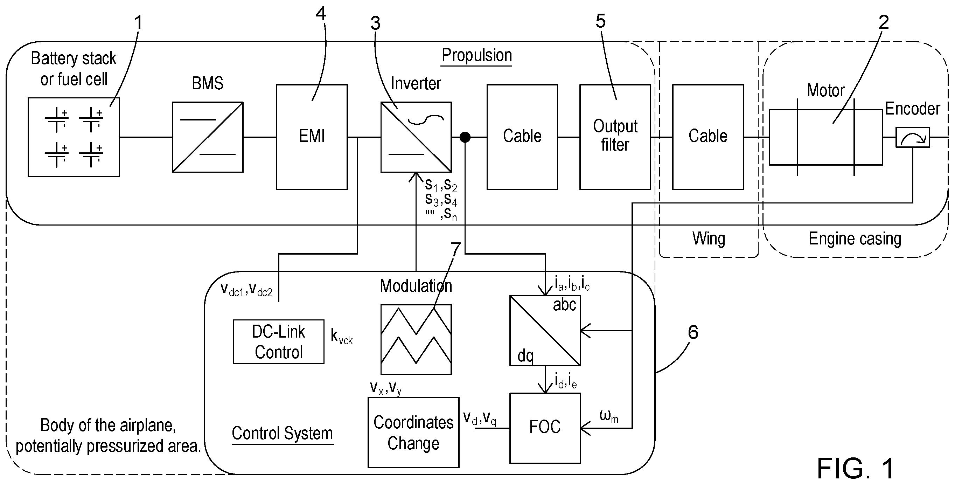

Figure 1 shows an example of a power drive train for driving a load such as a motor e.g. for aircraft propulsion. This is an example of a drive train to which the modulation of the present disclosure can be applied. The modulation of this disclosure, however, has application, and provides benefits in power converters of other types and for other applications and this is only one example.

The drive train includes a power supply 1 which, in this case, may be a battery or fuel cell. In other examples, the DC power may be provided from a rectified ac power/mains supply. The drive train drives a load, here a motor 2, using ac voltage derived by inverting the input power to obtain the desired level of power to drive the load. The desired drive level is provided by means of an inverter 3 comprising a body of switches as is known in the art. This will not be described further but the inverter may be a two-level, three-level or other multi-level inverter. Filters 4, 5 are typically provided at the input and output of the inverter.

The rate of switching of the inverter switches is controlled by a control signal from a control system 6 which includes a modulator 7 to provide a modulated (e.g. PWM) control signal to the inverter to control the on and off states of the inverter.

The present disclosure provides a modulation algorithm configured to control operation of the inverter to reduce or minimise generated CMV. For a multi-level inverter, the modulation algorithm can not only synthesise the output waveforms but, making use the of redundancy available in three or more level systems having additional degrees of freedom compared to two-level systems, can also optimise other parameters of inverter operation.

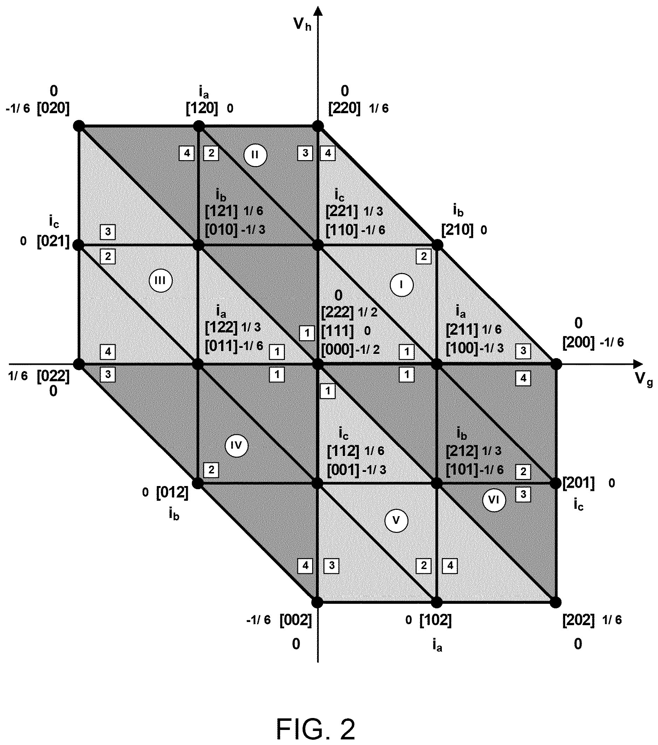

Using the phase voltages of a three-phase inverter, it is possible to determine the generated CMV component by mapping the components onto a space vector diagram. A space vector diagram is a graphic (typically 2D) representation of all possible line and phase voltages that an inverter can generate at its output terminals. Figure 2 shows a typical three-level space vector diagram for a three-phase inverter.

Each switching state produces uniquely defined three-phase line voltages which are represented, as shown, in a two-dimensional vector space. The diagram also indicates the CMV for each vector. For example [001] -1/3 means that for this vector, the CMV is -1/3 of the input, or $V_{dc}$ voltage.

As can be seen, desired outputs can be achieved by following different vector combinations with different associated CMV values. Large jumps between CMV values are undesirable, as these generate more CMC. Such large jumps correspond to large dv/dt which is why they are undesirable and why appropriate vector sequencing is important.

Any desired voltage vector (around the ideal circular locus) can be synthesised by the inverter by quickly alternating between adjacent state vectors (i.e. between different voltages, which can be generated by multiple different switch state combinations) and by controlling the timing (dwell time) at these voltages. Each desired voltage (i.e. position on the circular locus) can be achieved by averaging adjacent vectors (also known in the literature as 'nearest three vectors').

It can be seen that various combinations of vectors are possible to provide a desired output. The larger number of redundancies on the small vectors sets degrees of freedom for optimisation of the phase voltage domain. It is also possible to avoid those redundancies that generate higher (+/- 1/3 $V_{dc}$ or +/- ½ $V_{dc}$) as other alternative combinations are available for the desired output. For three (or more) level inverters, therefore, the vector combinations that minimise CMV can be selected.

In addition, the sequence in which the vectors are implemented is also important in reducing CMV by having smaller CMV steps or jumps when moving through the vectors. In other words, high CMV values and sharp or large transitions are undesirable in inverter modulation and can be better avoided for multi-level inverters using SVM modulation.

Whilst it is possible to optimise SVM modulation to reduce CMV, traditional SVM schemes still result in some CMV and require effective EMI filters as discussed above. The algorithm of this disclosure aims to limit the CMV component further without requiring changes at the dc-link by using the geometry of space vector diagrams to easily identify line vectors with limited CMV that comply with the dc-link capacitors' balancing requirements. More specifically, the algorithm introduces a fourth vector to the space vector diagram available for selection, that better balances the dc-link capacitors with minimum impact on the CMV. This will be described further below.

Further, in some examples, a sorting algorithm may be added to define the optimum switching sequence that minimises CMV transitions.

The present invention relates generally to methodologies for reducing the common mode noises generated by three-level or other multi-level inverter systems. This invention more particularly relates to modulation techniques for common mode noise reduction.

This disclosure proposes a new method of limiting the CMV component to $\pm 1/6$ $V_{dc}$ on three-phase three-level NPC family of VSIs while maintaining the dc-link capacitors regulation. The proposed method uses the geometry of space vector diagrams to easily identify line vectors with limited CMV that comply with dc-link capacitor balancing requirements.

As discussed above, the CM noise generated by a power inverter originates from the non-linear behavior of the switching semiconductors in their rise- and fall-time during commutation. Non-idealities in the circuit i.e., parasitic capacitances and inductances, form the path through which the noise will be conducted. The DO160G limits the DUT CM noise in the format of current, more precisely in dbμA. Since the CM current path to ground is majorly formed by capacitive elements, the *dv/dt* of the CMV becomes key to mitigate the conducted emissions of a VSI according to DO-160 criteria.

The basis for the proposed method is on the nearest-three-vectors (N3V) which is most common in SVM. This is described in detail in N. Celanovic and D. Boroyevich, 'A Fast Space-Vector Modulation Algorithm for Multilevel Three-Phase Converters," IEEE Transactions on Industry Applications, vol. 37, no. 12, pp. 637-641, 2001. In the traditional N3V SVM the reference vector is synthetized as:

$$\mathbf{V_{ref}} = d_1\mathbf{V_1} + d_{21}\mathbf{V_{21}} + d_{22}\mathbf{V_{22}} + d_3\mathbf{V_3}$$
$$d_1 + d_{21} + d_{22} + d_3 = 1 \qquad (1)$$
$$d_{21} + d_{22} = d_2$$

The vector $V_2$ is considered to be the one containing the redundancy in use; therefore, it is split into $V_{21}$ and $V_{22}$ representing each of the redundancies. The same is valid for the dwell time $d_2$. The implementation sequence follows a time window mask as:

| $\mathbf{V_{21}}$ | $\mathbf{V_1}$ | $\mathbf{V_3}$ | $\mathbf{V_{22}}$ | $\mathbf{V_3}$ | $\mathbf{V_1}$ | $\mathbf{V_{21}}$ |
|---|---|---|---|---|---|---|
| $\mathbf{d_{21}T_s/2}$ | $\mathbf{d_1T_s/2}$ | $\mathbf{d_3T_s/2}$ | $\mathbf{d_{22}T_s}$ | $\mathbf{d_3T_s/2}$ | $\mathbf{d_1T_s/2}$ | $\mathbf{d_{22}T_s/2}$ |

The average neutral point current $I_0$ within one switching period $T_s$ can be defined as:

$$\left\langle I_0 \right\rangle_{Ts} = d_1 I_{01} + d_{21} I_{021} + d_{22} I_{022} + d_3 I_{03} \qquad (2)$$

Once $V_{21}$ and $V_{22}$ are redundancies of the same line vector, their neutral point current equivalent can be defined as:

$$I_{021} = -I_{022} \qquad (3)$$

As defined before, the sum of $d_{21}$ and $d_{22}$ is equal to the dwell time $d_2$. Based on it, the necessary dwell time of $d_{21}$ to balance the dc-link capacitors can be calculated as:

$$d_{21} = \frac{d_1 I_{01} + d_2 I_{022} + d_3 I_{03}}{2 I_{022}} - \frac{I_{ref}}{2 I_{022}} \qquad (4)$$

The reference current $I_{ref}$ can be defined as:

$$I_{ref} = k_p \left( V_{dc2} - V_{dc1} \right) \qquad (5)$$

The limits for $d_{21}$ and, therefore, to $I_{ref}$ as well are defined by:

$$d_{21} \geq 0$$
$$d_{21} \leq d_2 \qquad (6)$$

Each of the four vectors contribution to the neutral point current during a switching period can be calculated based on the phase current and normalized phase voltage as:

$$I_{01} = i_a \left( 1 - \left| V_{a1} - 1 \right| \right) + i_b \left( 1 - \left| V_{b1} - 1 \right| \right) + i_c \left( 1 - \left| V_{c1} - 1 \right| \right)$$
$$I_{021} = i_a \left( 1 - \left| V_{a21} - 1 \right| \right) + i_b \left( 1 - \left| V_{b21} - 1 \right| \right) + i_c \left( 1 - \left| V_{c21} - 1 \right| \right)$$
$$I_{022} = i_a \left( 1 - \left| V_{a22} - 1 \right| \right) + i_b \left( 1 - \left| V_{b22} - 1 \right| \right) + i_c \left( 1 - \left| V_{c22} - 1 \right| \right) \qquad (7)$$
$$I_{03} = i_a \left( 1 - \left| V_{a3} - 1 \right| \right) + i_b \left( 1 - \left| V_{b3} - 1 \right| \right) + i_c \left( 1 - \left| V_{c3} - 1 \right| \right)$$

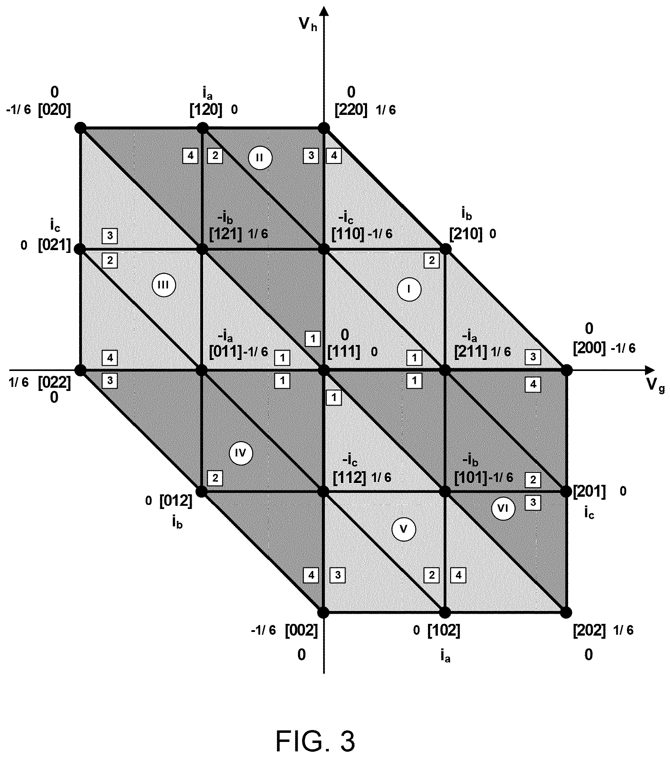

On N3V approaches the redundant vectors, $V_{21}$ and $V_{22}$, have different impacts on the CMV as shown in Fig. 2. The redundancies with 1/3 $V_{dc}$ CMV component will negatively contribute to the CMV current by increasing the peak CMV, the number of commutations and the dv/dt. Therefore, the algorithm of this disclosure starts by removing those components (or vector options), as shown on the rearranged space-vector diagram in Fig. 3, can improve the inverter's EMC performance.

Whilst avoiding those (redundant) vectors that negatively contribute to CMV improves EMC performance, removing them also removes the ability to balance the dc-link voltage without distorting the reference signal (note that this was an advantage provided by using both $V_{21}$ and $V_{22}$ from the SVD of Fig. 2). To therefore compensate for removing these redundant vectors, the algorithm of this disclosure then introduces a fourth vector to be used to derive the duty cycle and reference voltage vector. The reference vector is then based on four different vectors rather than the nearest-three-vectors previously used.

According to this disclosure, the fourth vector is selected that better balances the dc-link capacitors with minimum impact on the CMV.

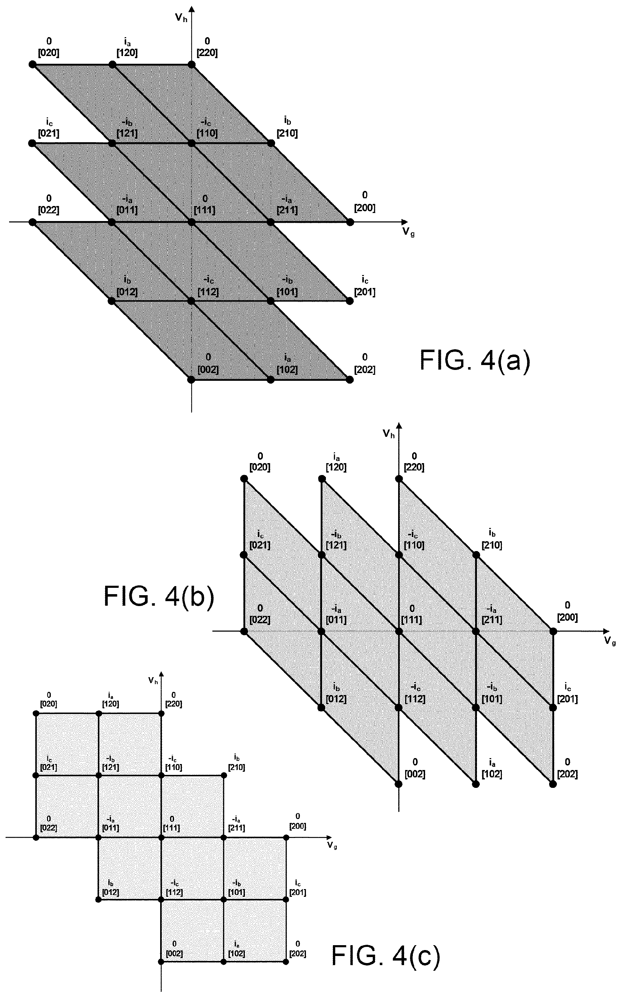

The extension of a fourth vector can be done in three different directions: horizontally, vertically and squared. The space-vector diagram in Fig. 3 is adapted to display all the three methods of extension of the N3V as shown in Figs. 4(a)-4(c). Figure 4(a) shows the four vectors being combined going horizontally across the SVD of Fig. 3 - i.e. combining adjacent triangles (three vectors) in the horizontal direction. Figure 4(b) shows the option of defining four vectors in the vertical direction and Figure 4(c) provides the extensions on a squares basis. As can be seen, the new three extensions can only be deployed if the reference vector lays inside each respective shaded area.

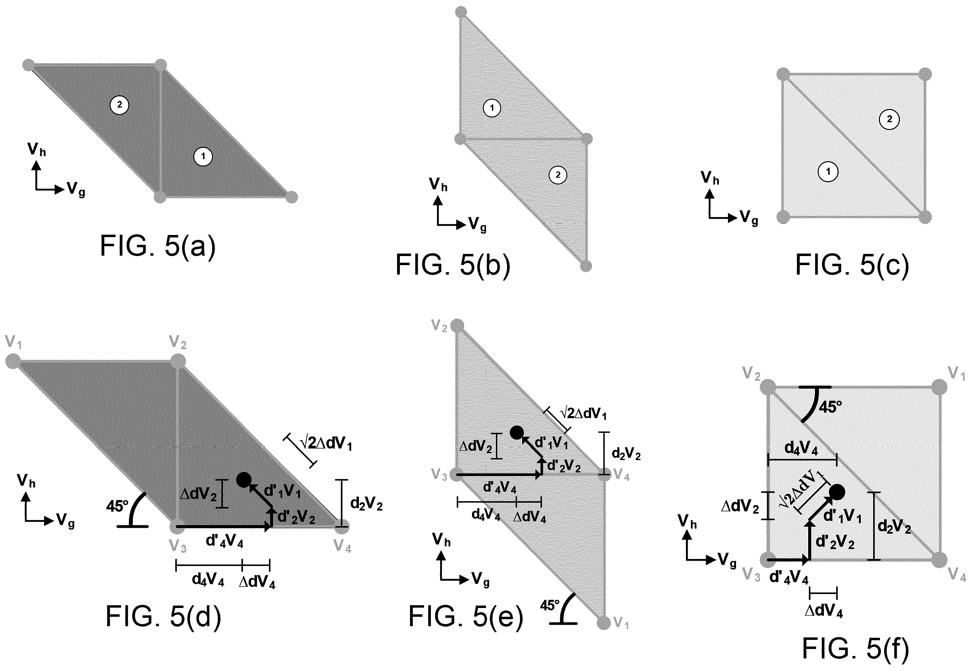

Similar to the N3V, the area formed by the four vectors in each one of the distributions of Figs. 4(a) - (c) are defining the vectors to be implemented within the switching period to synthesise the reference vector. In order to obtain the algebraic relations that define the dwell time of each vector on this distribution, the new formed areas are split in two zones, as show in Figures 5(a), (b) and (c). Starting with the reference vector (shown by a black circle) at zone 1, the vector addition proposed in this disclosure is shown in Figures 5 (d), (e) and (f). The definition of the new dwell times $d_1'$, $d_2'$ $d_3'$ and $d_4'$ to the horizontal, vertical, and square shapes are presented as:

$$
\begin{aligned}
d_1' &= \sqrt{2}\Delta d & d_1' &= \sqrt{2}\Delta d & d_1' &= \sqrt{2}\Delta d \\
d_2' &= d_2 - \Delta d & d_2' &= d_2 - \Delta d & d_2' &= d_2 - \Delta d \\
d_3' &= 1 - d_1' - d_2' - d_4' & d_3' &= 1 - d_1' - d_2' - d_4' & d_3' &= 1 - d_1' - d_2' - d_4' \\
d_4' &= d_4 + \Delta d & d_4' &= d_4 + \Delta d & d_4' &= d_4 - \Delta d
\end{aligned}
\tag{8}
$$

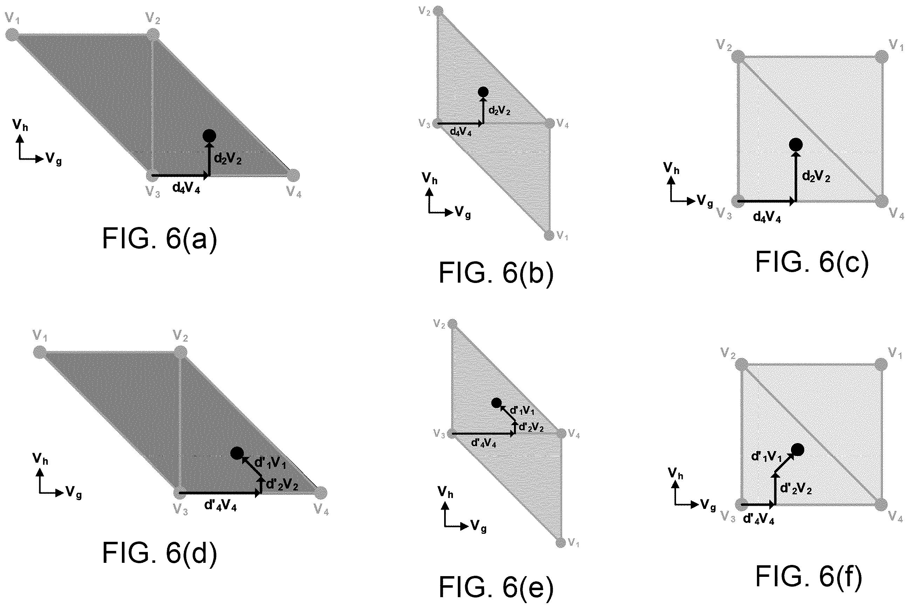

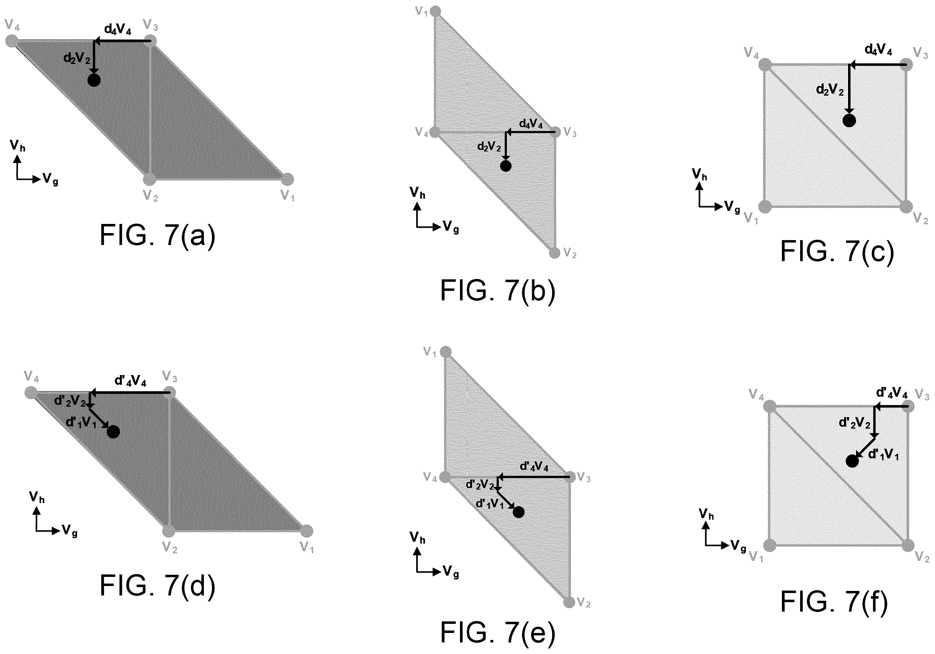

where: $\Delta d$ is the control variable, $d_2$ and $d_4$ are the N3V dwell times and are defined differently to each zone and shape. Due to the symmetry, vertical and horizontal shapes have the same set of equations while the square shape (Figs. 4(c), 5(c), and 5(f)) will vary slightly. Moreover, the definition of the vectors $V_1$, $V_2$, $V_3$ and $V_4$ can be rearranged for zone 2 so that for the cases where the reference vector is at zone 2 the equations will be identical to the cases in zone 1. Both assumptions above yield instead of 6 different sets of equations (3 different shapes and 2 different zones), only 2 sets of equations: 1 for horizontal/vertical shapes, 1 for square shape. Figs 6(a), (b) and (c) present for the zone 1 the original N3V vector addition using $d_2$ and $d_4$ dwell times while Figs. 6(d), (e) and (f) show the proposed fourth vector addition and the new vectorial sum composition that define $d_1'$, $d_2'$ and $d_4'$. Figure 7 depicts **Error! Reference source not found.**the same set vectorial sums for zone 2. More importantly, Figures 6 and 7 define the new arrangement of the vectors $V_1$, $V_2$, $V_3$ and $V_4$ to each zone that will maintain cohesion to the equations.

According to the vectors definition presented in Figures 6 and 7, the gh coordinates can be identified as shown in Table 1, set out in N. Celanovic and D. Boroyevich, 'A Fast Space-Vector Modulation Algorithm for Multilevel Three-Phase Converters," IEEE Transactions on Industry Applications, vol. 37, no. 12, pp. 637-641, 2001..

*Table 1 Four vectors coordinates identification per shape and zone.*

| Horizontal Zone 1 | Vertical Zone 1 | Square Zone 1 |
|---|---|---|
| $V_1 = [floor(v_g)\text{-}1\ ceil(v_h)]^T$<br>$V_2 = [floor(v_g)\ ceil(v_h)]^T$<br>$V_3 = [floor(v_g)\ floor(v_h)]^T$<br>$V_4 = [ceil(v_g)\ floor(v_h)]^T$ | $V_1 = [ceil(v_g)\ floor(v_h)\text{-}1]^T$<br>$V_2 = [floor(v_g)\ ceil(v_h)]^T$<br>$V_3 = [floor(v_g)\ floor(v_h)]^T$<br>$V_4 = [ceil(v_g)\ floor(v_h)]^T$ | $V_1 = [ceil(v_g)\ ceil(v_h)]^T$<br>$V_2 = [floor(v_g)\ ceil(v_h)]^T$<br>$V_3 = [floor(v_g)\ floor(v_h)]^T$<br>$V_4 = [ceil(v_g)\ floor(v_h)]^T$ |
| $d_2 = d_{lu}$<br>$d_4 = d_{ul}$ | $d_2 = d_{lu}$<br>$d_4 = d_{ul}$ | $d_2 = u_{lu}$<br>$d_4 = d_{ul}$ |

(continued)

| Horizontal Zone 2 | Vertical Zone 2 | Square Zone 2 |
|---|---|---|
| $V_1 = [ceil(v_g)+1 \ floor(v_h)]^T$ <br> $V_2 = [ceil(v_g) \ floor(v_h)]^T$ <br> $V_3 = [ceil(v_g) \ ceil(v_h)]^T$ <br> $V_4 = [floor(v_g) \ ceil(v_h)]^T$ | $V_1 = [floor(v_g)ceil(v_h)+1]^T$ <br> $V_2 = [ceil(v_g) \ floor(v_h)]^T$ <br> $V_3 = [ceil(v_g) \ ceil(v_h)]^T$ <br> $V_4 = [floor(v_g) \ ceil(v_h)]^T$ | $V_1 = [floor(v_g) \ floor(v_h)]^T$ <br> $V_2 = [ceil(v_g) \ floor(v_h)]^T$ <br> $V_3 = [ceil(v_g) \ ceil(v_h)]^T$ <br> $V_4 = [floor(v_g) \ ceil(v_h)]^T$ |
| $d_2 = d_{ul}$ <br> $d_4 = d_{lu}$ | $d_2 = d_{ul}$ <br> $d_4 = d_{lu}$ | $d_2 = d_{ul}$ <br> $d_4 = d_{lu}$ |

The average NP current in known SVM is replaced by the controller reference current for dc-link balance. In the present method, $\Delta d$ is the control variable. The $\Delta d$ that balances the dc-link caps according to I$_{ref}$ on the vertical and horizontal shapes and its saturation limits are defined as:

Horizontal/Vertical

$$\Delta d = \frac{I_{ref} + d_2\left(I_{03} - I_{02}\right) + d_4\left(I_{03} - I_{04}\right) - I_{03}}{\sqrt{2}I_{01} - I_{02} - \sqrt{2}I_{03} + I_{04}}$$

$$\Delta d_{min} = 0 \qquad\qquad (9)$$

$$\Delta d_{max} = min\left(d_2, 1 - d_4, \frac{1 - d_2 - d_4}{\left(\sqrt{2}\right)}\right)$$

And the $\Delta d$ and saturation limits for the square cases can be described as:

Square

$$\Delta d = \frac{I_{ref} + d_2\left(I_{03} - I_{02}\right) + d_4\left(I_{03} - I_{04}\right) - I_{03}}{\sqrt{2}I_{01} - I_{02} + \left(2 - \sqrt{2}\right)I_{03} - I_{04}}$$

$$\Delta d_{min} = 0 \qquad\qquad (10)$$

$$\Delta d_{max} = min\left(d_2, d_4, \frac{1 - d_2 - d_4}{\left(2 - \sqrt{2}\right)}\right)$$

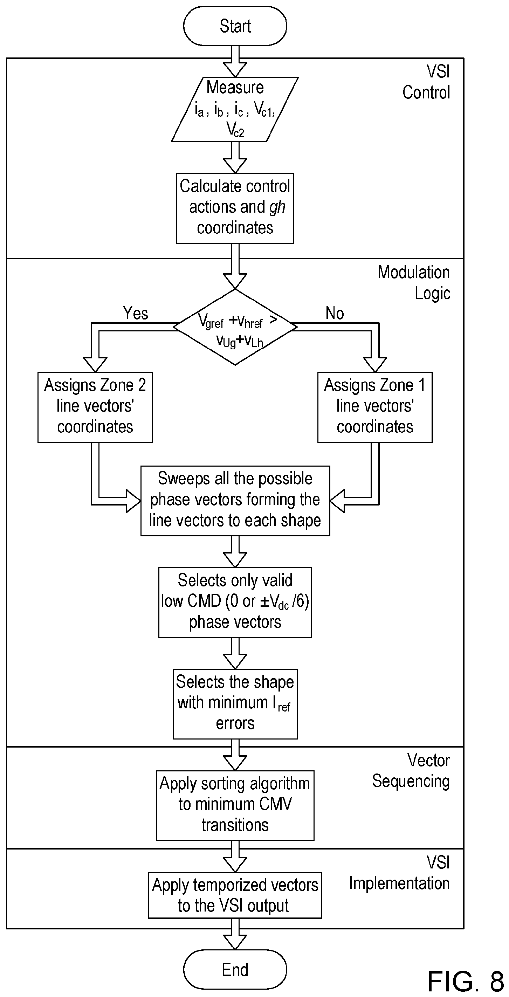

Figure 8 presents a flow chart depicting a step-by-step implementation of the proposed modulation on a generic three-level NPC-family VSI. The start and end of the process in Figure 8 occurs in a short interval at the end of every switching period but can also be deployed to multi-sampled operations.

First, the phase current and capacitor voltages are measured. Control actions and SVD gh coordinates are then calculated. If the reference vector coordinates are less than the upper g coordinate plus the lower h coordinate, the reference vector is deemed to be in one zone (zone 1) of the vector sector defined by the four vectors. If the reference vector coordinates are greater than the upper g coordinate plus the lower h coordinate, the reference vector is deemed to be in the other zone (zone 2) of the vector sector. A sweep of all possible phase vectors forming the four line vectors of the respective shapes is performed and only those vectors with a CMV value below the predetermined threshold (0 or +/- 1/6V$_{dc}$) are selected. Those vectors responsible for a higher CMV contribution are removed from consideration. The duty cycle and switching sequence are then calculated from the four vectors. In the example shown, the step pf sorting is also performed to minimise CMV transitions. The resulting switching vectors/duty cycles are then applied to the controller to switch the switches to provide the desired output.

Using the algorithm of this disclosure leads to CM noise reduction by means of software, without requiring extra circuitry. Lower CM noise leads to lower saturation current on the CM Choke core, and consequently weight reduction on the EMI filter.

Further, the modular approach of this algorithm can be easily scaled to generic n-level NPC-family topologies.

The solution is based on SVM and can be easily modified to multi-target optimization during operation.

## Claims

1. A method of implementing a space vector pulse width modulation scheme comprising:

   mapping switching states for an n-phase, where n is an integer, multi-level inverter onto a two-dimensional hexagonal space vector diagram;
   identifying redundant vectors in the space vector diagram and removing redundant vectors associated with a common mode voltage current contribution of more than a predetermined threshold;
   identifying a location in the space vector diagram of a voltage reference vector;
   identifying a sector of the space vector diagram defined by four vectors within which the voltage reference vector is located;
   determining duty cycles and switching states associated with the four vectors to synthesise the voltage reference vector.

2. The method of claim 1, further comprising dividing the sector of the space vector diagram into two equal triangular zones; wherein duty cycles and switching states are determined for a voltage reference vector located in one of the zones, and wherein the determined duty cycles and switching states are used to synthesise a voltage reference vector at a corresponding location in the other zone.

3. The method of claim 1 or 2, wherein the step of identifying a sector identifies sectors defined in a horizontal direction with respect to the space vector diagram.

4. The method of claim 1 or 2, wherein the step of identifying a sector identifies sectors defined in a vertical direction with respect to the space vector diagram.

5. The method of claim 1 or 2, wherein the step of identifying a sector identifies square sectors within the space vector diagram.

6. The method of any preceding claim, further comprising determining switching sequence associated with the four vectors to synthesise the voltage reference vector.

7. The method of claim 6, further comprising applying a sorting algorithm to select vectors to provide an optimum switching sequence that minimises CMV transitions.

8. The method of any preceding claim, where n is 3.

9. The method of any of claims 1 to 7, where n is greater than 3.

10. A space vector modulator configured to perform the method of any preceding claim.

11. A power converter comprising an input stage, an inverter stage and an output stage, and a space vector modulator for provided PWM switching signals to the inverter.

12. The power converter of claim 11, wherein the inverter stage is a three-level inverter.

FIG. 1

FIG. 2

FIG. 3

FIG. 4(a)

FIG. 4(b)

FIG. 4(c)

FIG. 5(a)

FIG. 5(b)

FIG. 5(c)

FIG. 5(d)

FIG. 5(e)

FIG. 5(f)

FIG. 6(a)

FIG. 6(b)

FIG. 6(c)

FIG. 6(d)

FIG. 6(e)

FIG. 6(f)

EP 4 629 495 A1

FIG. 7(a)

FIG. 7(b)

FIG. 7(c)

FIG. 7(d)

FIG. 7(e)

FIG. 7(f)

Start

VSI
Control

Measure
$i_a$, $i_b$, $i_c$, $V_{c1}$, $V_{c2}$

Calculate control
actions and $gh$
coordinates

Modulation
Logic

$V_{gref} + V_{href} > V_{Ug} + V_{Lh}$

Yes

No

Assigns Zone 2
line vectors'
coordinates

Assigns Zone 1
line vectors'
coordinates

Sweeps all the possible
phase vectors forming the
line vectors to each shape

Selects only valid
low CMD (0 or $\pm V_{dc}/6$)
phase vectors

Selects the shape
with minimum $I_{ref}$
errors

Vector
Sequencing

Apply sorting algorithm
to minimum CMV
transitions

VSI
Implementation

Apply temporized vectors
to the VSI output

End

FIG. 8

Vo_calc   3"V0_cm/540

FIG. 9(a)

Vo_calc   3"V0_cm/540

FIG. 9(b)

EP 4 629 495 A1

Europäisches
Patentamt

European
Patent Office

Office européen
des brevets

# EUROPEAN SEARCH REPORT

**Application Number**

EP 24 16 8114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/145607 A1 (JIAO DA [US] ET AL) 24 May 2018 (2018-05-24) * paragraph [0013] - paragraph [0041] * * paragraph [0045] - paragraph [0049] * * figures 1,2 * | 1-12 | INV. H02M1/12 H02M1/44 H02M7/483 H02M7/5387 |
| A | WANG CUI ET AL: "Space Vector Modulation in the 45° Coordinates [alpha]'[beta]' for Multilevel Converters", IEEE TRANSACTIONS ON POWER ELECTRONICS, INSTITUTE OF ELECTRICAL AND ELECTRONICS ENGINEERS, USA, vol. 36, no. 6, 25 November 2020 (2020-11-25), pages 6525-6536, XP011836325, ISSN: 0885-8993, DOI: 10.1109/TPEL.2020.3040216 [retrieved on 2021-02-03] * the whole document * | 1-12 | |

**TECHNICAL FIELDS SEARCHED (IPC)**

H02M

The present search report has been drawn up for all claims

| Place of search | Date of completion of the search | Examiner |
|---|---|---|
| The Hague | 13 September 2024 | Lochhead, Steven |

## ANNEX TO THE EUROPEAN SEARCH REPORT
## ON EUROPEAN PATENT APPLICATION NO.

EP 24 16 8114

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2024

| Patent document cited in search report | Publication date | Patent family member(s) | Publication date |
|---|---|---|---|
| US 2018145607 A1 | 24-05-2018 | CA 2985770 A1 | 22-05-2018 |
| | | MX 369958 B | 27-11-2019 |
| | | US 9979319 B1 | 22-05-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. CELANOVIC** ; **D. BOROYEVICH**. A Fast Space-Vector Modulation Algorithm for Multilevel Three-Phase Converters. *IEEE Transactions on Industry Applications*, 2001, vol. 37 (12), 637-641